# FASCICULE DE BREVET EUROPEEN

(11) **EP 1 936 330 B1**
(45) Date de publication et mention de la délivrance du brevet: **02.03.2016**
(21) Numéro de dépôt: 07023705.2
(22) Date de dépôt: 07.12.2007
(51) Int. Cl.: G01C 23/00

(54) **Procédé et système de traitement et de visualisation d'images de l'environnement d'un aéronef**
Verfahren und System zur Verarbeitung und Visualisierung von Bildern der Umgebung eines Luftfahrzeugs
Method and system for processing and visualising images of the surroundings of an aircraft

(30) Priorité: 21.12.2006 FR 0611217
(43) Date de publication de la demande: 25.06.2008
(73) Titulaire: Airbus Helicopters, 13725 Marignane Cedex (FR)
(72) Inventeur: Piré, Richard, 13800 Istres (FR)
(74) Mandataire: GPI & Associés

(56) Documents cités:
- EP-A1- 0 373 979
- EP-A2- 1 083 076
- FR-A1- 2 780 380
- FR-A1- 2 826 762
- FR-A1- 2 870 422
- US-A1- 2002 171 739

## Description

La présente invention est relative à un procédé et à un dispositif (ou système) de traitement et/ou de visualisation d'images de l'environnement d'un aéronef, à bord de celui-ci.

Le domaine technique de l'invention est celui de la fabrication de systèmes d'aide au pilotage qui sont embarqués à bord de giravions.

La présente invention est plus particulièrement relative à un système d'aide au pilotage délivrant à l'équipage une image de la scène extérieure traitée et optimisée pour un vol à basse altitude.

Il est difficile de délivrer à l'équipage d'un aéronef une image optimum de la scène extérieure de façon qu'il puisse voler au plus près des obstacles pour effectuer un vol contour (civil ou militaire) ou un vol tactique (militaire) dans les conditions de visibilité dégradée ou de nuit.

Les systèmes de pilotage proposés pour l'heure possèdent de nombreuses limitations et ne permettent pas de présenter de façon optimale les obstacles dangereux à l'équipage d'un aéronef.

La présente invention s'inscrit dans le cadre de l'aide à l'évitement d'obstacles par un aéronef, ce qui a donné lieu à diverses propositions.

Il a été proposé dans le brevet FR-2 780 380, de former une pseudo image à partir d'informations relatives à la topographie de l'environnement de l'aéronef, qui sont délivrées par un capteur embarqué tel qu'un radar ou un capteur à laser. L'analyse de l'éloignement associé à chaque point (pixel) de la pseudo image permet de souligner les points les moins éloignés de l'aéronef.

Il a été proposé dans le brevet DE-10065180, d'utiliser des informations obtenues par traitement d'images délivrées par une ou plusieurs caméras embarquées à bord d'un aéronef pour détecter la présence d'un autre aéronef et prédire sa trajectoire, pour éviter une collision entre les deux aéronefs. Les traitements d'image comportent une compression et une adaptation de contraste.

D'autres brevets proposent de modifier une image de l'environnement extérieur en fonction d'informations résultant de mesures de distance :
- le brevet FR2 712 251 propose de superposer à une image du paysage extérieur -dans le spectre visible ou infrarouge-, de signes, symboles, ou courbes dont la position résulte d'un traitement de données télémétriques déterminant le sommet d'obstacles dangereux détectés (par télémétrie) ;
- le brevet US-6,243,482 propose de mélanger des contours d'obstacles déterminés par traitement de données télémétriques, à une image de base captée par un système de vision naturelle ; le traitement de l'image télémétrique est un filtrage passe-haut.

C'est ce genre de systèmes de traitement d'images délivrées par une caméra (de pilotage) en vue de leur visualisation, que l'invention se propose d'améliorer.

Le document EP1083076 décrit un appareil d'affichage pour un véhicule terrestre, qui comprend un dispositif de détection d'image apte à capter une image d'un paysage en avant du véhicule en utilisant des rayons infrarouges, un dispositif d'affichage pour afficher l'image détectée par le dispositif de détection face à un siège du conducteur, et des moyens de détection de distance pour détecter un obstacle présent devant le véhicule, et à détecter une distance entre l'image de l'obstacle et le véhicule. Des moyens de commande d'affichage permettent de changer le mode d'affichage de l'obstacle, en fonction d'un résultat de détection par les moyens de détection de distance.

Conformément à un aspect de l'invention, il est proposé un procédé de traitement d'une image délivrée par une caméra en fonction de données de position d'obstacle(s), ces données pouvant résulter de mesures télémétriques effectuées dans le champ d'observation de la caméra, dans lequel on ajuste le gain (i.e. le contraste) et/ou l'offset (i.e. la brillance) de tout ou partie de l'image, selon un (ou plusieurs) paramètre(s) d'ajustement déterminé(s) en fonction de la distribution de l'intensité lumineuse des points/pixels d'une partie -ou fenêtre- seulement de l'image, la position de cette partie -ou fenêtre- dans l'image étant déterminée à partir (notamment) des données de position d'obstacle(s).

En d'autres termes et selon un autre aspect de l'invention, il est proposé un procédé de traitement d'une image de l'environnement d'un aéronef dans lequel on détermine, à l'intérieur de cette image, une fenêtre ou zone d'intérêt en fonction des coordonnées, dans une pseudo image formée à partir de mesures télémétriques dans un angle solide correspondant au champ d'observation reflété par l'image, d'obstacles détectés et/ou sélectionnés en fonction de leur dangerosité, i.e. leur proximité par rapport à la position courante de l'aéronef ou à la trajectoire prévisionnelle de l'aéronef. Ladite zone d'intérêt comportant plusieurs pixels contigus/adjacents, en particulier plusieurs dizaines ou centaines de pixels contigus/adjacents, on détermine ensuite au moins un paramètre de modification de l'intensité lumineuse des points/pixels de cette fenêtre ou zone d'intérêt, pour augmenter le contraste dans cette fenêtre ou zone d'intérêt, et on procède à une modification, selon ledit paramètre de modification, de l'intensité lumineuse d'une partie au moins de l'image.

Selon d'autres aspects et caractéristiques préférentiel(le)s de l'invention :
- pour traiter une image captée par un capteur d'image (installé) à bord d'un aéronef équipé d'un système de localisation d'obstacle, on détermine la position et l'étendue, en particulier le contour, d'une zone de l'image captée - dite zone d'intérêt - en fonction de données de localisation d'obstacle délivrées par le système de localisation d'obstacle, on détermine au moins une donnée/paramètre de modification de contraste permettant d'augmenter le contraste de la zone de l'image captée pour obtenir une zone d'image captée de contraste accentué, et on modifie l'intensité lumineuse de tous les points de l'image captée selon une loi dépendant de ladite donnée de modification de contraste, pour obtenir une image captée modifiée (que l'on peut présenter à un membre d'équipage de l'aéronef) ;
- on détermine la position et l'étendue de la zone de l'image captée en fonction de données de localisation d'obstacle et en fonction de données de navigation délivrées par un système de navigation embarqué ;
- on mesure par télémétrie la distance, le site, et le gisement de points du terrain situés en avant de l'aéronef pour obtenir des données de localisation d'obstacle et pour déterminer la position et/ou l'étendue de la zone d'intérêt ;
- on lit des données d'une base de données (embarquée) de terrain et/ou d'obstacles pour obtenir des données de localisation d'obstacle et pour déterminer la position et/ou l'étendue de la zone d'intérêt ;
- on détermine un contour polygonal et/ou curviligne, en partie ou en totalité, pour la zone d'intérêt ;
- on détermine la position et/ou le contour de la zone d'intérêt pour que le gisement du centre de cette zone soit voisin du (corresponde sensiblement au) gisement du vecteur vitesse de l'aéronef, ou bien pour que le centre de cette zone soit voisin du (corresponde sensiblement au) centre de l'image captée modifiée présentée à l'équipage ;
- on détermine la position et/ou le contour de la zone d'intérêt pour qu'une partie du contour de cette zone soit voisin d'une (corresponde sensiblement à une) courbe de sécurité calculée à partir des données de localisation d'obstacle et en fonction de la position courante et de la trajectoire prévisionnelle et/ou du vecteur vitesse de l'aéronef ;
- la courbe de sécurité est calculée avec une hauteur de garde nulle, la courbe s'appuyant sur la crête d'obstacles dangereux par rapport à la position courante et à la trajectoire prévisionnelle et/ou du vecteur vitesse de l'aéronef ;
- on utilise une technique d'égalisation d'un histogramme de l'intensité des pixels de la zone d'intérêt pour l'accentuation du contraste de la zone d'intérêt qui peut être ensuite appliquée à l'image captée entière.

On peut modifier la répartition des histogrammes de pixels par une loi linéaire -ou multilinéaire - fonction de l'intensité lumineuse minimum et de l'intensité lumineuse maximum des points de la zone d'intérêt. On peut également modifier cette répartition par une loi linéaire fonction de l'écart type et de la moyenne de l'intensité lumineuse des points de la zone d'intérêt.

Certaines au moins des opérations des procédés selon l'invention peuvent être mises en oeuvre par une unité électronique de traitement de données, telle qu'un calculateur, fonctionnant sous la commande d'un programme.

Ainsi, selon un autre aspect de l'invention, il est proposé un programme comportant un code fixé sur un support - tel qu'une mémoire - ou matérialisé par un signal, le code étant lisible et/ou exécutable par au moins une unité de traitement de données - telle qu'un processeur embarqué ou embarquable sur un aéronef, pour modifier des images de l'environnement de l'aéronef captées par un imageur embarqué, le code comportant des segments de code pour effectuer des opérations d'un procédé décrit dans la présente.

Selon un autre aspect et un mode préféré de réalisation de l'invention, il est proposé un programme utilisable (lisible et/ou exécutable) par un processeur (i.e. une unité de traitement de données) embarqué à bord d'un aéronef, le processeur étant arrangé pour coopérer avec - en particulier étant connecté à - un imageur embarqué tel qu'une caméra ainsi qu'à/avec un système embarqué de fourniture de données de position d'obstacle(s), ce système pouvant comporter un télémètre tel qu'un radar ou un lidar, pour recevoir d'une part des données d'image et d'autre part des données de site, gisement, et distance séparant l'aéronef d'obstacle(s) situé(s) dans le champ d'observation de l'imageur, ces données de site-gisement-distance permettant de former une pseudo image concordant partiellement au moins - en direction et champ de vue - avec une image délivrée par l'imageur.

Le programme peut comporter au moins un segment de code pour déterminer les coordonnées (abscisse ou gisement d'une part, ordonnée ou site d'autre part) d'au moins un point de la pseudo image qui correspond à un obstacle, au moins un segment de code pour déterminer au moins un point/pixel d'une image captée par l'imageur qui correspond au point de la pseudo image, et au moins un segment de code pour déterminer une fenêtre ou zone d'intérêt incluant le point/pixel ainsi déterminé de l'image captée ; le programme comporte en outre un ou plusieurs segment(s) de code pour augmenter le contraste dans la zone d'intérêt de l'image captée.

A cet effet, ces segments de code peuvent provoquer une égalisation d'histogramme, i.e. une modification de l'intensité des pixels, pour la zone d'intérêt seulement, qui soit telle que la distribution de l'intensité des pixels (ou points) de la fenêtre (ou zone d'intérêt) soit équilibrée/répartie.

La loi de modification d'intensité lumineuse ainsi déterminée et optimisée pour la fenêtre d'intérêt peut ensuite être appliquée à l'ensemble de l'image captée.

L'invention permet de régler automatiquement le contraste et/ou la luminosité d'une partie au moins d'une image captée de manière à accentuer la visibilité de la partie d'image qui inclue des obstacles détectés, quelle que soient leur nature et leur position par rapport à l'horizon et/ou par rapport à une ligne de crête, grâce au traitement d'image effectué sur la partie d'image qui est de préférence sensiblement centrée, en gisement et/ou en site, sur un ou plusieurs obstacles détectés dans des directions voisines de la direction de déplacement de l'aéronef - correspondant au « vecteur vitesse » de celui-ci.

Cette modification automatique des images captées peut être réalisée en temps réel afin de compenser des variations rapides du contraste et de l'intensité dues d'une part aux variations de la direction d'observation résultant notamment des variations d'attitude de l'aéronef, et d'autre part à la variété de la scène observée : ciel, terre ou mer, température de la scène (dans le cas d'une image infra rouge), notamment.

Ce traitement automatique améliore la qualité des images délivrées à l'équipage et l'intelligibilité de symboles représentatifs d'obstacles qui peuvent être superposés à l'image de la scène observée, comme décrit dans le brevet FR2712251 susmentionné.

L'invention est particulièrement adaptée aux aéronefs à voilure tournante effectuant un vol « contour » ou tactique.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.
La figure 1 illustre schématiquement les principaux composants et l'architecture d'un système/dispositif selon l'invention.
La figure 2 illustre schématiquement l'application d'un procédé selon l'invention à un environnement comportant un obstacle d'intérêt (pylône) se détachant sur un fond « de sol ».
La figure 3 illustre schématiquement l'application d'un procédé selon l'invention à un environnement comportant un obstacle (pylône) se détachant sur un fond « de ciel ».
La figure 4 illustre schématiquement l'application d'un procédé selon l'invention à un environnement comportant un obstacle aérien filaire tel qu'un câble électrique suspendu.

L'invention permet notamment de réaliser un traitement d'image « intensité » ou vidéo de pilotage qui privilégie les contrastes sur une zone d'intérêt calculée à partir de signaux ou données délivré(e)s par un senseur d'image « distance » et d'un senseur de pilotage (AHRS/GPS ou INS).

La position et l'étendue de la zone d'intérêt peuvent être calculées en fonction de la position et de l'étendue d'un cordon de sécurité avec hauteur de garde nulle (ou crête des obstacles dangereux), comme décrit dans le brevet FR2712251 susmentionné.

L'invention peut être mise en oeuvre avec les techniques connues de traitement d'image vidéo, en particulier avec des techniques de rehaussement de contraste par histogrammes cumulés et/ou de filtrage des hautes fréquences spatiales dans les données d'image ; un tel filtrage permet d'amplifier des variations brusques d'intensité entre deux pixels successifs, et de renforcer les contours des obstacles (obstacles filaires notamment). Ces traitements ne sont généralement appliqués qu'à la zone d'intérêt.

Selon un aspect de l'invention, il est proposé un traitement d'image optimisé pour une ou plusieurs zones d'intérêt dans une image de pilotage, la position et l'étendue de ces zones étant déterminées en fonction de la connaissance de la crête des obstacles dangereux ou d'intérêt élaborée à partir d'un traitement d'au moins une pseudo image (ou image « distance ») élaborée(s) à partir de mesures télémétriques.

Les abréviations usuelles suivantes sont utilisées dans la présente:
AHRS ("Attitude and Heading Reference System"): système de référence de cap et d'attitude;
GPS (« Global Positioning System »): système de positionnement global par satellites;
HDD (« Head-Down Display »): visualisation tête basse;
HMS/D (« Helmet Mounted Sight/ Display »): vision/affichage sur casque;
HUD (« Head Up display »): système de surimpression des informations au pilote pour un mode pilotage "tête haute » ;
INS (« Inertial Navigation System »): système de navigation inertiel ;
LIDAR (« Light Detection and Ranging »): détection et télémétrie par la lumière ;
OWS (« Obstacle Warning System »): système de détection d'obstacles ;
RADAR ("Radio Detection and Ranging"): détection et télémétrie radio.

Les technologies d'imagerie (infra rouge en particulier) sont utilisées dans l'aéronautique pour améliorer la perception de l'environnement extérieur de l'aéronef par l'équipage, notamment de nuit ou par mauvaises conditions de visibilité. Des caméras de pilotage « tout temps » équipent à cet effet des aéronefs civils (fonction EVS « Enhanced Vision System ») et des aéronefs militaires.

Comme la scène observée par une caméra de pilotage varie au cours d'un vol (variation dans la proportion sol ciel, température de scène variable, survol de la terre ou de la mer), un traitement d'image automatique incluant un réglage du gain et de l'offset de l'image captée, permet de réduire la charge de travail pour l'équipage.

Des systèmes existants de traitement d'images pour caméras de pilotage et des systèmes existants d'aide au pilotage d'un aéronef sont basés sur l'analyse statistique de l'image captée. Ces systèmes ne donnent pas entièrement satisfaction car les obstacles d'intérêt, c'est-à-dire les obstacles dangereux (pour la sécurité du vol), sont mal perçus.

Dans un mode de réalisation d'un procédé selon l'invention, on augmente le contraste d'une zone « privilégiée » d'une image captée, cette zone étant déterminée en fonction des coordonnées dans une pseudo image « superposable » à l'image captée, qui est formée de « plots bruts » donnés par un détecteur d'obstacle de type LIDAR ou RADAR, une caméra télémétrique à balayage ou une caméra télémétrique instantanée dite « snapshot ».

Le détecteur d'obstacle permet de déterminer la (les) partie(s) d'une pseudo image qui correspond(ent) à l'objet (aux objets) le(s) plus dangereux ; ceci permet, après mise en correspondance de la pseudo image et d'une image captée, en direction et champ de vue (ouverture), de déterminer une zone d'intérêt dans l'image captée, et en particulier de centrer la zone d'intérêt sur la partie correspondante de l'image qui contient un ou plusieurs obstacle(s) déterminés comme dangereux compte tenu de la trajectoire de l'aéronef.

Ainsi, l'accentuation du contraste de la partie d'image captée correspondant à la zone d'intérêt, fait ressortir les obstacles dangereux dans l'image captée ainsi modifiée - qui est présentée au pilote.

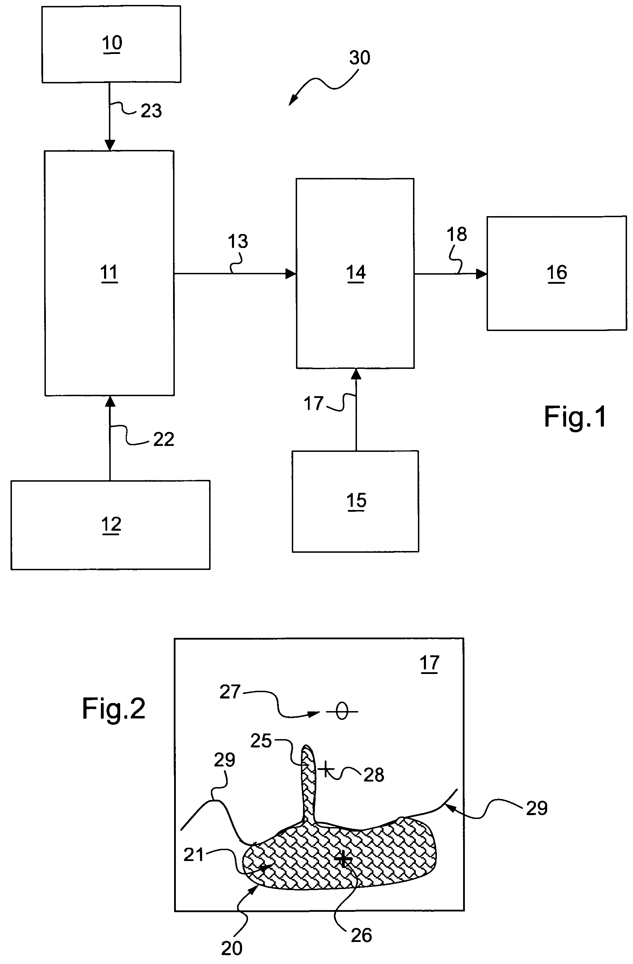

Par référence à la figure 1 notamment, le système 30 embarqué selon l'invention comporte un système 10 de positionnement de l'aéronef et de navigation, tel qu'un AHRS (ou INS) couplé à un GPS, ainsi qu'un système 12 de localisation d'obstacles dangereux pour l'aéronef.

Le système 12 peut comporter un télémètre, une base de données d'obstacles, et/ou un modèle numérique de terrain.

Le système 30 comporte une caméra 15 d'observation de l'environnement extérieur de l'aéronef, en avant de celui-ci, et un organe 16 d'affichage d'images à l'attention d'un (co)pilote.

Le système 30 comporte en outre deux unités 11, 14 de traitement de signaux/données; la première unité 11 de traitement est reliée aux systèmes 10 et 12 pour en recevoir respectivement des données 23 de navigation et de position de l'aéronef, et des données 22 de localisation de points du sol susceptibles de constituer des obstacles pour l'aéronef.

La seconde unité 14 de traitement est reliée à la première unité 11, à l'imageur 15 délivrant des données d'image 17 captée, et à l'afficheur 16 auquel l'unité 14 délivre des signaux/données d'affichage d'image captée modifiée conformément à l'invention.

L'unité 11 détermine, à partir des données 22 et 23, des données 13 de définition, i.e. position et étendue, d'une zone d'intérêt, et transmet ces données 13 à l'unité 14. L'unité 14 optimise le contraste de la partie de l'image 17 captée correspondant à la zone 21 d'intérêt, et commande l'affichage de l'image captée modifiée.

Lorsqu'une courbe/cordon 29 de sécurité (figure 2) calculée à partir de la position des obstacles 25 détectés est présentée/affichée en superposition avec l'image captée ainsi traitée, le pilote peut mieux faire la corrélation entre le cordon de sécurité et l'obstacle associé présenté contrasté sur l'image captée de l'environnement extérieur.

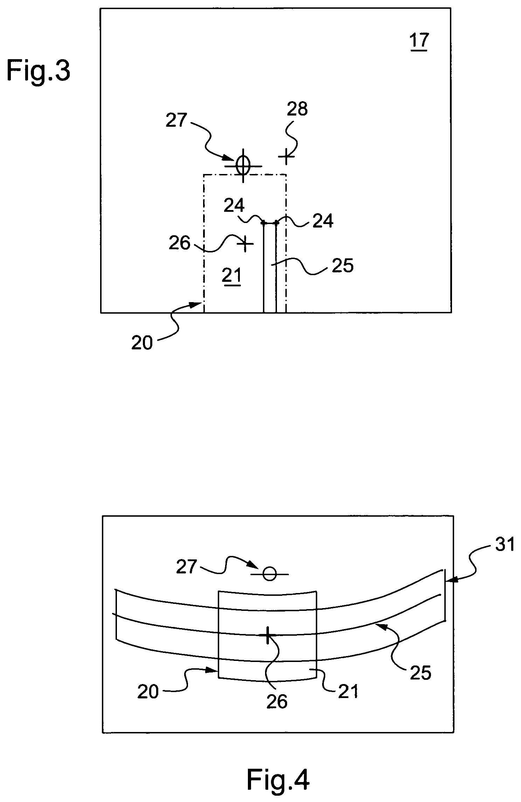

On peut avantageusement positionner le centre 26 de la zone 21 ou fenêtre d'intérêt, en gisement, soit au voisinage du gisement du vecteur vitesse 27 courant de l'aéronef, comme illustré figures 3 et 4, soit au voisinage du centre 28 d'un écran d'affichage de l'image captée modifiée, comme illustré figure 2, en fonction d'un choix qui peut être sélectionné manuellement par le pilote.

On peut positionner le centre 26 de la zone 21 ou fenêtre d'intérêt, en site, en fonction du site d'un cordon 29 de sécurité (avantageusement filtré dans le repère sol et dans le repère image) calculé à partir des plots bruts 22 issus du détecteur d'obstacle 12.

L'étendue, en gisement et en site, du champ de vue correspondant à la zone ou fenêtre d'intérêt peuvent respectivement correspondre à la plage de valeurs de gisement et à la plage de valeurs de site des obstacles dangereux détectés et/ou de la courbe de sécurité.

L'accentuation du contraste de la zone d'intérêt peut être basé sur la technique d'égalisation d'histogramme ; dans ce cas, le gain peut être linéaire, peut être fonction d'un histogramme cumulé, ou peut être multilinéaire (méthode mixte des deux méthodes précédentes).

Un rehaussement des hautes fréquences dans une seconde zone 31 d'intérêt située autour (s'étendant en partie au dessus et en partie au dessous) d'une ligne de crête des obstacles dangereux détectés peut permettre de faire ressortir des obstacles filaires 25, comme illustré figure 4.

La figure 2 illustre une zone 21 d'intérêt dont une partie supérieure du contour 20 curviligne coïncide sensiblement avec une courbe 29 de sécurité. La figure 3 illustre une zone d'intérêt 21 dont le contour 20 est rectangulaire, tandis que le contour 20 de la figure 4 comporte deux segments rectilignes verticaux reliés par deux segments curvilignes superposés.

## Revendications

1. Procédé de traitement d'une image (17) captée par un capteur (15) d'image à bord d'un aéronef , l'aéronef étant équipé d'un système (12) de localisation d'obstacle, procédé **caractérisé en ce que** :
- on délivre par le système de localisation d'obstacle de l'aéronef des données de localisation d'au moins un obstacle,
- on détermine la position et l'étendue, en particulier le contour (20), d'une zone d'intérêt (21) de l'image captée en fonction des données de localisation du ou des obstacles, délivrées par le système de localisation d'obstacle,
- ladite zone d'intérêt comportant plusieurs pixels contigus ou adjacents,
- on détermine ensuite au moins un paramètre de modification de l'intensité lumineuse des points/pixels de cette zone d'intérêt permettant de privilégier les contrastes sur cette zone d'intérêt, et
- on procède à une modification, selon ledit paramètre de modification, de l'intensité lumineuse d'une partie au moins de l'image (17), cette partie de l'image (17) correspondant à la zone d'intérêt (21).

2. Procédé selon la revendication 1 dans lequel on détermine la position et l'étendue de la zone (21) de l'image captée en fonction de données (22) de localisation d'obstacle et en fonction de données (23) de navigation délivrées par un système (10) de navigation embarqué.

3. Procédé selon la revendication 1 ou 2 dans lequel on mesure par télémétrie la distance, le site, et le gisement de points (24) du terrain situés en avant de l'aéronef pour obtenir des données (22) de localisation d'obstacle (25) et pour déterminer la position et/ou l'étendue de la zone (21) d'intérêt.

4. Procédé selon l'une quelconque des revendications 1 à 3 dans lequel on lit des données d'une base de données embarquée de terrain et/ou d'obstacles pour obtenir des données (22) de localisation d'obstacle (25) et pour déterminer la position et/ou l'étendue de la zone (21) d'intérêt.

5. Procédé selon l'une quelconque des revendications 1 à 4 dans lequel on détermine un contour (20) polygonal, en partie ou en totalité, pour la zone (21) d'intérêt.

6. Procédé selon l'une quelconque des revendications 1 à 5 dans lequel on détermine un contour (20) curviligne, en partie ou en totalité, pour la zone (21) d'intérêt.

7. Procédé selon l'une quelconque des revendications 1 à 6 dans lequel on détermine la position et/ou le contour de la zone d'intérêt pour que le gisement du centre (26) de cette zone (21) soit voisin du (corresponde sensiblement au) gisement du vecteur vitesse (27) de l'aéronef.

8. Procédé selon l'une quelconque des revendications 1 à 7 dans lequel on détermine la position et/ou le contour de la zone d'intérêt pour que le centre (26) de cette zone (21) soit voisin du (corresponde sensiblement au) centre (28) de l'image captée modifiée présentée à l'équipage.

9. Procédé selon l'une quelconque des revendications 1 à 8 dans lequel on détermine la position et/ou le contour de la zone d'intérêt pour qu'une partie du contour de cette zone soit voisin d'une (corresponde sensiblement à une) courbe (29) de sécurité calculée à partir des données de localisation d'obstacle et en fonction de la position courante et de la trajectoire prévisionnelle ou du vecteur vitesse de l'aéronef.

10. Procédé selon la revendication 9 dans lequel la courbe de sécurité est calculée avec une hauteur de garde nulle, la courbe s'appuyant sur la crête d'obstacles (25) dangereux par rapport à la position courante et à la trajectoire prévisionnelle ou vecteur vitesse de l'aéronef.

11. Procédé selon l'une quelconque des revendications 1 à 10 dans lequel on utilise une technique d'égalisation d'histogramme de l'intensité des pixels de la zone d'intérêt pour l'accentuation du contraste de la zone d'intérêt.

12. Procédé selon la revendication 11 dans lequel on modifie la répartition des histogrammes de pixels par une loi linéaire fonction de l'intensité lumineuse minimum et de l'intensité lumineuse maximum des points de la zone d'intérêt.

13. Procédé selon la revendication 11 dans lequel on modifie la répartition des histogrammes de pixels par une loi multilinéaire fonction de l'intensité lumineuse minimum et de l'intensité lumineuse maximum des points de la zone d'intérêt.

14. Procédé selon les revendications 12 et 13 dans lequel on modifie la répartition des histogrammes de pixels par une loi linéaire fonction de l'écart type et de la moyenne de l'intensité lumineuse des points de la zone d'intérêt.

15. Procédé selon l'une quelconque des revendications 1 à 14 dans lequel on applique la modification de contraste déterminée dans la zone d'intérêt, à l'image captée entière.

16. Procédé selon l'une quelconque des revendications 1 à 15 dans lequel on effectue un rehaussement des hautes fréquences spatiales dans une zone d'intérêt située autour (s'étendant en partie au dessus et en partie au dessous) d'une ligne de crête des obstacles dangereux détectés, pour faire ressortir des obstacles (25) filaires.

17. Système (30) d'aide au pilotage d'un aéronef comportant :
- un imageur (15),
- un afficheur (16),
- un système (10) de positionnement de l'aéronef et de navigation,
- un système (12) de localisation d'obstacles dangereux pour l'aéronef,
**caractérisé en ce que** le système comprend de plus, pour obtenir une zone d'intérêt (21) sur laquelle les contrastes sont privilégiés:
- une première unité de traitement (11) qui est reliée au système (10) de positionnement de l'aéronef et de navigation et au système (12) de localisation d'obstacles dangereux pour l'aéronef, ladite première unité de traitement déterminant la position et l'étendue, en particulier le contour (20), de la zone d'intérêt (21) de l'image captée en fonction de données de localisation d'obstacle délivrées par le système (12) de localisation d'obstacle
- une deuxième unité de traitement (14) reliée à la première unité de traitement ainsi qu'à l'imageur et à l'afficheur afin que, ladite zone d'intérêt comportant plusieurs pixels contigus ou adjacents, la deuxième unité de traitement (14) détermine ensuite au moins un paramètre de modification de l'intensité lumineuse des points/pixels de cette zone d'intérêt permettant de privilégier les contrastes sur cette zone d'intérêt, et procède à une modification, selon ledit paramètre de modification, de l'intensité lumineuse d'une partie au moins de l'image (17), cette partie de l'image (17) correspondant à la zone d'intérêt (21).

## Patentansprüche

1. Verfahren zur Verarbeitung eines Bildes (17), welches von einem Bildaufnehmer (15) an Bord eines Luftfahrzeugs aufgenommen wird, wobei das Luftfahrzeug mit einem System (12) zur Lokalisierung eines Hindernisses ausgerüstet ist, wobei das Verfahren **dadurch gekennzeichnet ist, dass**
- von dem System zur Lokalisierung eines Hindernisses des Luftfahrzeugs Lokalisierungsdaten von mindestens einem Hindernis geliefert werden,
- die Lage und die Erstreckung, insbesondere die Kontur (20), eines interessierenden Bereichs (21) des aufgenommenen Bildes in Abhängigkeit von den Lokalisierungsdaten des Hindernisses oder der Hindernisse, die von dem System zur Lokalisierung eines Hindernisses geliefert werden, bestimmt wird,
- wobei der interessierende Bereich mehrere aneinanderstoßende oder benachbarte Pixel aufweist,
- anschließend mindestens ein Parameter der Änderung der Lichtintensität von Punkten/Pixeln dieses interessierenden Bereichs bestimmt wird, der es erlaubt, die Kontraste in diesem interessierenden Bereich hervorzuheben, und
- gemäß dem Änderungsparameter eine Änderung der Lichtintensität mindestens eines Teils des Bildes vorgenommen wird, wobei dieser Teil des Bildes (17) dem interessierenden Bereich (21) entspricht.

2. Verfahren nach Anspruch 1, bei dem die Lage und Erstreckung des Bereichs (21) des aufgenommenen Bildes in Abhängigkeit von Daten (22) zur Lokalisierung des Hindernisses und in Abhängigkeit von Navigationsdaten (23), die von einem Bordnavigationssystem (10) geliefert werden, bestimmt wird.

3. Verfahren nach Anspruch 1 oder 2, bei dem durch Telemetrie aus der Entfernung der Ort und das Vorkommen von Punkten (24) des Gebiets, das vor dem Luftfahrzeug liegt, gemessen werden, um Daten (22) zur Lokalisierung eines Hindernisses (25) zu erhalten, und um die Lage und/oder die Erstreckung des interessierenden Bereichs (21) zu bestimmen.

4. Verfahren nach einem der Ansprüche 1 bis 3, bei dem Daten einer Borddatenbank bezüglich des Geländes und/oder bezüglich Hindernissen ausgelesen werden, um Daten (22) zur Lokalisierung eines Hindernisses (25) zu erhalten, und um die Lage und/oder die Erstreckung des interessierenden Bereichs (21) zu bestimmen.

5. Verfahren nach einem der Ansprüche 1 bis 4, bei dem eine polygonale Kontur (20) teilweise oder ganz für den interessierenden Bereich (21) bestimmt wird.

6. Verfahren nach einem der Ansprüche 1 bis 5, bei dem eine krummlinige Kontur (20) zum Teil oder ganz für den interessierenden Bereich (21) bestimmt wird.

7. Verfahren nach einem der Ansprüche 1 bis 6, bei dem die Lage und/oder die Kontur des interessierenden Bereichs bestimmt wird, damit die Peilung der Mitte (26) dieses Bereichs (21) nahe der Peilung des Geschwindigkeitsvektors (27) des Luftfahrzeugs liegt (im Wesentlichen der Peilung des Geschwindigkeitsvektors (27) des Luftfahrzeugs entspricht).

8. Verfahren nach einem der Ansprüche 1 bis 7, bei dem die Lage und/oder die Kontur des interessierenden Bereichs bestimmt wird, sodass die Mitte (26) dieses Bereichs (21) nahe der Mitte (28) des aufgenommenen, modifizierten und der Besatzung gezeigten Bilds liegt (im Wesentlichen der Mitte (28) des aufgenommenen, modifizierten und der Besatzung gezeigten Bilds entspricht).

9. Verfahren nach einem der Ansprüche 1 bis 8, bei dem die Lage und/oder die Kontur des interessierenden Bereichs bestimmt wird, damit ein Teil der Kontur dieses Bereichs nahe einer Sicherheitskurve (29) liegt (im Wesentlichen einer Sicherheitskurve (29) entspricht), die ausgehend von Lokalisierungsdaten eines Hindernisses und in Abhängigkeit von der aktuellen Position und der geplanten Flugbahn oder dem Geschwindigkeitsvektor des Luftfahrzeugs berechnet wird.

10. Verfahren nach Anspruch 9, bei dem die Sicherheitskurve mit einer Höhe über dem Boden von Null berechnet wird, wobei die Kurve auf dem Kamm von gefährlichen Hindernissen (27) relativ zu der aktuellen Position und der geplanten Flugbahn oder dem Geschwindigkeitsvektor des Luftfahrzeugs ruht.

11. Verfahren nach einem der Ansprüche 1 bis 10, bei dem eine Technik einer Egalisierung eines Histogramms der Intensität von Pixeln in dem interessierenden Bereich verwendet wird, um den Kontrast des interessierenden Bereichs zu verstärken.

12. Verfahren nach Anspruch 11, bei dem die Verteilung von Histogrammen von Pixeln durch eine lineare Regel modifiziert wird, die abhängig ist von der minimalen Lichtintensität und der maximalen Lichtintensität von Punkten in dem interessierenden Bereich.

13. Verfahren nach Anspruch 11, bei dem die Verteilung von Histogrammen von Pixeln durch eine multilineare Regel in Abhängigkeit von der minimalen Lichtintensität und der maximalen Lichtintensität von Punkten des interessierenden Bereichs verändert wird.

14. Verfahren nach den Ansprüchen 12 und 13, bei dem die Verteilung von Histogrammen von Pixeln durch eine linear Regel in Abhängigkeit von dem typischen Abstand und dem Mittel der Lichtintensität von Punkten des interessierenden Bereichs geändert wird.

15. Verfahren nach einem der Ansprüche 1 bis 14, bei dem die Änderung des in dem interessierenden Bereich bestimmten Kontrasts auf dem gesamten aufgenommenen Bild durchgeführt wird.

16. Verfahren nach einem der Ansprüche 1 bis 15, bei dem eine Verstärkung von hohen räumlichen Frequenzen in einem interessierenden Bereich vorgenommen wird, der um (teilweise über und teilweise unter) eine Kammlinie von erfassten gefährlichen Hindernissen liegt, um drahtförmige Hindernisse (25) hervorzuheben.

17. System (30) zur Unterstützung des Steuerns eines Luftfahrzeugs mit
- einem Bildgeber (15),
- einer Anzeige (16),
- einem System (10) zur Bestimmung der Position des Luftfahrzeugs und zur Navigation,
- einem System (12) zur Lokalisierung von für das Luftfahrzeug gefährlichen Hindernissen,
**dadurch gekennzeichnet, dass** das System zusätzlich zum Erhalten eines interessierenden Bereichs (21), in dem die Kontraste hervorgehoben sind, aufweist:
- eine erste Verarbeitungseinheit (11), die mit dem System (10) zur Positionierung des Luftfahrzeugs und zur Navigation und mit dem System (12) zur Lokalisierung von für das Luftfahrzeug gefährlichen Hindernissen verbunden ist, wobei die erste Verarbeitungseinheit die Position und Erstreckung, insbesondere die Kontur (20), des interessierenden Bereichs (21) des aufgenommenen Bildes in Abhängigkeit von Daten zur Lokalisierung eines Hindernisses, die von dem System (12) zur Lokalisierung eines Hindernisses geliefert werden, bestimmt,
- eine zweite Verarbeitungseinheit (14), die mit der ersten Verarbeitungseinheit sowie mit dem Bildgeber und der Anzeige verbunden ist, damit, wenn der interessierende Bereich mehrere aneinanderstoßende oder benachbarte Pixel aufweist, die zweite Verarbeitungseinheit (14) anschließend mindestens einen Parameter zur Veränderung der Lichtintensität von Punkten/Pixeln dieses interessierenden Bereichs bestimmt, der es ermöglicht, die Kontraste in diesem interessierenden Bereich hervorzuheben und eine Änderung der Lichtintensität mindestens eines Teils des Bildes (17) gemäß dem Änderungsparameter vornimmt, wobei dieser Teil des Bildes (17) dem interessierenden Bereich (21) entspricht.

## Claims

1. Method for processing an image (17) sensed by an image sensor (15) on board an aircraft, the aircraft being fitted with an obstacle locating system (12), which method is **characterised in that**:
- data for locating at least one obstacle is delivered by the object locating system of the aircraft,
- the position and the extent, in particular the outline (20), of a zone of interest (21) of the sensed image are determined as a function of the location data of the obstacle or of the obstacles, delivered by the obstacle location system,
- said zone of interest comprising a plurality of contiguous or adjacent pixels,
- at least one modification parameter for modifying the luminous intensity of the points/pixels of said zone of interest making it possible to enhance the contrasts in said zone of interest is subsequently determined, and
- a modification is carried out, according to said modification parameter, of the luminous intensity of at least a portion of the image (17), said portion of the image (17) corresponding to the zone of interest (21).

2. Method according to claim 1, wherein the position and the extent of the zone (21) of the sensed image are determined as a function of obstacle location data (22) and as a function of navigation data (23) delivered by an on-board navigation system (10).

3. Method according to claim 1 or 2, wherein the distance, the elevation, and the bearing of terrain points (24) situated ahead of the aircraft are measured by telemetry in order to obtain obstacle (25) location data (22) and in order to determine the position and/or the extent of the zone of interest (21).

4. Method according to any one of claims 1 to 3, wherein the data is read from an on-board database of terrain and/or obstacles in order to obtain obstacle (25) location data (22) and in order to determine the position and/or the extent of the zone of interest (21).

5. Method according to any one of claims 1 to 4, wherein a polygonal outline (20) is determined, in part or in full, for the zone of interest (21).

6. Method according to any one of claims 1 to 5, wherein a curvilinear outline (20) is determined, in part or in full, for the zone of interest (21).

7. Method according to any one of claims 1 to 6, wherein the position and/or the outline of the zone of interest is determined so that the bearing of the centre (26) of said zone (21) is close to (corresponds substantially to) the bearing of the velocity vector (27) of the aircraft.

8. Method according to any one of claims 1 to 7, wherein the position and/or the outline of the zone of interest is determined so that the centre (26) of said zone (21) is close to (corresponds substantially to) the centre (28) of the modified sensed image presented to the crew.

9. Method according to any one of claims 1 to 8, wherein the position and/or the outline of the zone of interest is determined so that a portion of the outline of said zone is close to a (corresponds substantially to a) safety curve (29) calculated from the obstacle location data and as a function of the current position and of the predicted trajectory or of the velocity vector of the aircraft.

10. Method according to claim 9, wherein the safety curve is calculated with a zero clearance height, the curve resting on the crest of dangerous obstacles (25) relative to the current position and to the predicted trajectory or velocity vector of the aircraft.

11. Method according to any one of claims 1 to 10, wherein a technique of histogram equalisation of the intensity of the pixels of the zone of interest is used in order to accentuate the contrast of the zone of interest.

12. Method according to claim 11, wherein the distribution of the pixel histograms is modified by a linear relationship that is a function of the minimum luminous intensity and of the maximum luminous intensity of the points of the zone of interest.

13. Method according to claim 11, wherein the distribution of the pixel histograms is modified by a multilinear relationship that is a function of the minimum luminous intensity and of the maximum luminous intensity of the points of the zone of interest.

14. Method according to claims 12 and 13, wherein the distribution of the pixel histograms is modified by a linear relationship that is a function of the standard deviation and of the average of the luminous intensity of the points of the zone of interest.

15. Method according to any one of claims 1 to 14, wherein the contrast modification determined in the zone of interest is applied to the entire sensed image.

16. Method according to any one of claims 1 to 15, wherein a highlighting of the high spatial frequencies in a zone of interest situated around (extending in part above and in part below) a crest line of the detected dangerous obstacles is carried out, in order to cause filamentary obstacles (25) to stand out.

17. System (30) for assisting the piloting of an aircraft, comprising:
- an image sensor (15),
- a display (16),
- a system (10) for positioning the aircraft and for navigation,
- a system (12) for locating obstacles dangerous for the aircraft,
**characterised in that** the system further comprises, in order to obtain a zone of interest (21) in which the contrasts are enhanced:
- a first processing unit (11) which is connected to the system (10) for positioning the aircraft and for navigation and to the system (12) for locating obstacles dangerous for the aircraft, said first processing unit determining the position and the extent, in particular the outline (20), of the zone of interest (21) of the sensed image as a function of obstacle location data delivered by the system (12) for locating obstacles
- a second processing unit (14) connected to the first processing unit and also to the image sensor and to the display so that, said zone of interest comprising a plurality of contiguous or adjacent pixels, the second processing unit (14) subsequently determines at least one modification parameter for modifying the luminous intensity of the points/pixels of said zone of interest making it possible to enhance the contrasts in said zone of interest, and carries out a modification, according to said modification parameter, of the luminous intensity of at least a portion of the image (17), said portion of the image (17) corresponding to the zone of interest (21).
